# EUROPEAN PATENT APPLICATION

(11) **EP 4 835 000 A1**
(43) Date of publication of application: **04.11.2026**
(21) Application number: 24912862.0
(22) Date of filing: 25.12.2024
(51) Int. Cl.: C08L 69/00

(54) **RESIN COMPOSITION, METHOD FOR PRODUCING SAME, AND MOLDED BODY**

(30) Priority: 28.12.2023 JP 2023222524
(71) Applicant: MITSUBISHI GAS CHEMICAL COMPANY, INC., Chiyoda-ku Tokyo 100-8324 (JP)
(72) Inventor: KATO, Noriyuki, Tokyo 100-8324 (JP); NISHIMORI, Katsushi, Tokyo 125-8601 (JP); MOTEGI, Atsushi, Tokyo 125-8601 (JP); ISHIHARA, Kentaro, Tokyo 125-8601 (JP); FUKUI, Kiyoshiro, Tokyo 125-8601 (JP)
(74) Representative: Hoffmann Eitle
(86) International application number: PCT/JP2024/045806
(87) International publication number: WO 2025/142976

(57) **Abstract**

There has been a need for a resin composition that enables a molded body, which is obtained by molding the resin composition, or the like to have excellent properties. In addition, it has not been easy to reliably and easily produce a resin composition, which enables the achievement of a molded body having excellent properties, by a conventional production method. The above-mentioned problem is solved by a resin composition which contains an oligomer that includes a first constituent unit (A) derived from a monomer represented by general formula (1), and a polycarbonate resin that includes a second constituent unit (B) derived from a monomer represented by any one of general formulae (2a) to (2c), wherein the molecular weight (Mw) of the oligomer is 500-20,000. The details of general formulae (1) and (2a) to (2c) are as shown in the description of the present application.

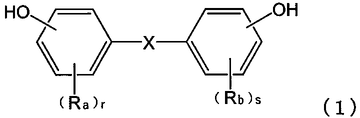

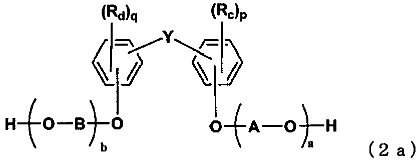

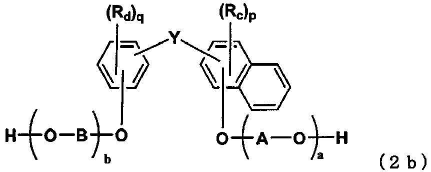

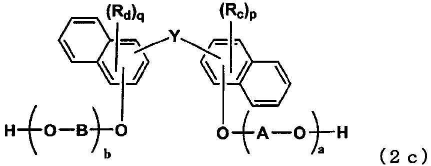

## Description

### TECHNICAL FIELD

The present invention relates to a resin composition, a method for producing the resin composition, a molded body obtained by molding the resin composition, and the like, and more particularly to a resin composition comprising a predetermined oligomer and resin, and the like.

### BACKGROUND ART

Resin compositions have heretofore been used in various applications. The resin compositions are often mixtures of some types of resins, oligomers, and the like. For example, a resin composition for use in optical applications is known (e.g., Patent literature 1).

### PRIOR ART DOCUMENTS

### PATENT DOCUMENTS

Patent literature 1: WO2010/010703

### SUMMARY OF INVENTION

### PROBLEMS TO BE SOLVED BY THE INVENTION

Depending on a conventional resin composition, it has not been necessarily easy to obtain a molded body excellent in appearance. Furthermore, conventional resin compositions, when used in optical applications, have often failed to realize sufficiently good properties in obtained optical members, for example, due to a large phase difference. Accordingly, there has been a need for a resin composition that produces excellent properties mainly in a molded body after a molding process.

Also, depending on a conventional method for producing a resin composition, it has not been easy to produce, reliably and by a simple approach, a resin composition that can realize excellent properties mainly in a molded body as mentioned above.

### MEANS FOR SOLVING THE PROBLEMS

The present invention includes, for example, the following.
[1] A resin composition comprising
   an oligomer comprising a first structural unit (A) derived from a monomer represented by general formula (1) below, and
   a polycarbonate resin comprising a second structural unit (B) derived from a monomer represented by any of general formulas (2a)-(2c) below, wherein:
   the molecular weight (Mw) of the oligomer is 500-20,000: 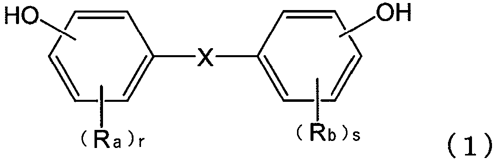 (in formula (1),
   Rₐ and R_{b} are each independently hydrogen, fluorine, chlorine, bromine, iodine, or an optionally substituted alkyl group with 1-20 carbon atoms, aryl group with 6-12 carbon atoms, alkenyl group with 2-12 carbon atoms, alkoxy group with 1-5 carbon atoms, or aralkyl group with 7-17 carbon atoms,
   r and s are each independently an integer from 0 to 4, and
   X is represented by formula (3): 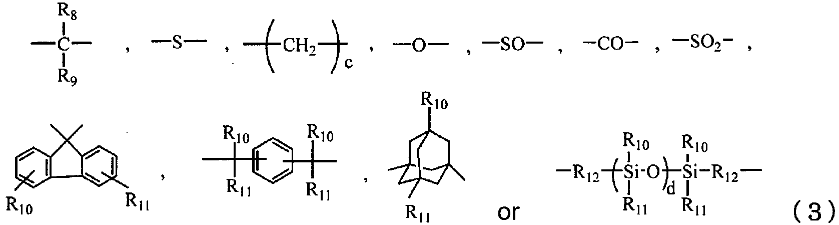 (in formula (3),
   R₈ and R₉ each independently represent hydrogen, fluorine, chlorine, bromine, iodine, or an optionally substituted alkyl group with 1-20 carbon atoms, alkoxy group with 1-5 carbon atoms, or aryl group with 6-12 carbon atoms, or
   R₈ and R₉ are groups that are bonded to form a carbocyclic ring with 5-20 carbon atoms or a heterocyclic ring with 5-12 elements,
   R₁₀ and R₁₁ each independently represent hydrogen, fluorine, chlorine, bromine, iodine, or an optionally substituted alkyl group with 1-9 carbon atoms, alkoxy group with 1-5 carbon atoms, alkenyl group with 2-12 carbon atoms, or aryl group with 6-12 carbon atoms,
   R₁₂ is each independently an optionally substituted alkylene group with 1-9 carbon atoms,
   c represents an integer from 0 to 20, and
   d represents an integer from 1 to 500) 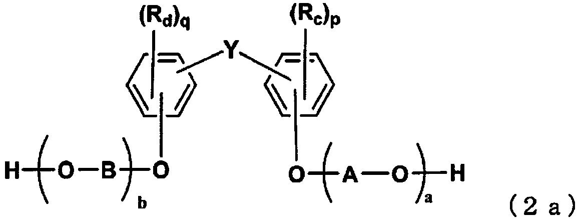 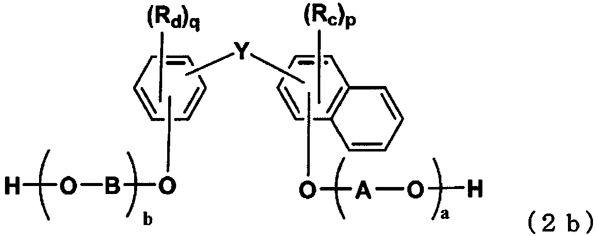 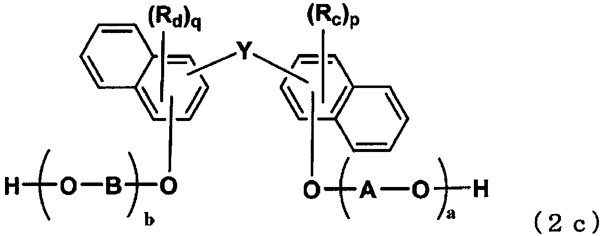 (in general formulas (2a)-(2c),
   R_{c} and R_{d} are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, and an optionally substituted aryl group with 6-20 carbon atoms,
   Y is each independently an optionally substituted fluorene group,
   A and B each independently represent an optionally substituted alkylene group with 1-5 carbon atoms,
   p and q each independently represent an integer from 0 to 4, and
   a and b each independently represent an integer from 0 to 10).
[2] The resin composition according to [1] above, wherein the molecular weight (Mw) of the oligomer is 1,000-10,000.
[3] The resin composition according to [1] or [2] above, for example, [1] above, wherein the molecular weight (Mw) of the polycarbonate resin is 20,000-300,000.
[4] The resin composition according to any one of [1] to [3] above, for example, [1] above, wherein
   in general formula (1), which represents the monomer that generates the first structural unit (A),
   Rₐ and R_{b} are each independently hydrogen, or an optionally substituted alkyl group with 1-12 carbon atoms or aryl group with 6-10 carbon atoms, and
   r and s are each independently 0 or 1.
[5] The resin composition according to any one of [1] to [4] above, for example, [1] above, wherein the monomer that generates the second structural unit (B) is represented by general formula (2a).
[6] The resin composition according to any one of [1] to [5] above, for example, [1] above, wherein the content of the oligomer relative to the total mass of the resin composition is 0.5-18 wt%.
[7] The resin composition according to any one of [1] to [6] above, for example, [1] above, wherein the mass ratio between the polycarbonate resin and the oligomer is 80:20-99:1.
[8] The resin composition according to [7] above, wherein the mass ratio between the polycarbonate resin and the oligomer is 90:10-95:5.
[9] The resin composition according to any one of [1] to [8] above, for example, [1] above, wherein the resin composition comprises any of a polycarbonate oligomer, a polyester oligomer, and a polyester carbonate oligomer having the first structural unit (A).
[10] The resin composition according to any one of [1] to [9] above, for example, [1] above, wherein the resin composition further comprises any of a polyester resin and a polyester carbonate resin having the second structural unit (B).
[11] The resin composition according to any one of [1] to [10] above, for example, [1] above, wherein the average phase difference of the resin composition is 40 nm or less.
[12] A method for producing the resin composition according to any one of [1] to [11] above, for example, [1] above, the production method comprising
   mixing the polycarbonate resin and the oligomer at 270°C or higher, followed by melt extrusion.
[13] The production method according to [12] above, wherein a screw speed in a cylinder in which the melt extrusion is performed is 200 rpm or more.
[14] The production method according to [12] or [13] above, for example, [12] above, wherein the polycarbonate resin and the oligomer are continuously added into the cylinder using a rotary feeder.
[15] An optical material comprising the resin composition according to any one of [1] to [11] above, for example, [1] above.
[16] A molded article obtained by molding using the resin composition according to any one of [1] to [11] above, for example, [1] above.
[17] The molded article according to [16] above which is a lens having an average phase difference of 40 nm or less.

### ADVANTAGEOUS EFFECT OF THE INVENTION

According to the present invention, a resin composition capable of producing, for example, a molded body that has good properties, as exemplified by a lens with a reduced phase difference, while having excellent appearance can be realized. The present invention can also provide a production method that can produce such a useful resin composition by a simple approach and reliably.

### BRIEF DESCRIPTION OF DRAWINGS

[Figure 1] Figure 1 is a graph showing the relationship between the molecular weight of an oligomer in a resin composition and the phase difference value (nm) of a molded lens in Examples and Comparative Examples with an oligomer content of 7.4 wt%.
[Figure 2] Figure 2 is a graph showing the relationship between the content (wt%) of an oligomer in a resin composition and the phase difference value (nm) of a molded lens in Examples and Comparative Examples with an oligomer with a weight average molecular weight (Mw) of 4500.

### DESCRIPTION OF EMBODIMENTS

Hereinafter, preferred embodiments of the present invention will be described in detail.

### <1. Resin composition>

### 1-1. Component of resin composition

A resin composition of the present invention comprises an oligomer and a polycarbonate resin. Each of the oligomer and the polycarbonate resin has a specific structural unit, the details of which will be described below.

The resin composition may comprise a thermoplastic resin other than the polycarbonate resin. The resin composition may comprise, for example, a thermoplastic resin such as a polyester carbonate resin or a polyester resin in addition to the polycarbonate resin or instead of the polycarbonate resin.

### 1-2. Oligomer

The oligomer contained in the resin composition may be any of a polycarbonate oligomer, a polyester oligomer, and a polyester carbonate oligomer, or a mixture thereof. The oligomer preferably comprises at least a polycarbonate oligomer.

The oligomer serving as a component of the resin composition comprises a first structural unit (A) derived from a monomer which is a diol compound represented by general formula (1) below. Specifically, the oligomer comprises a first structural unit (A) which is bonded to another structural unit via O of a hydroxy group of a diol compound represented by formula (1).

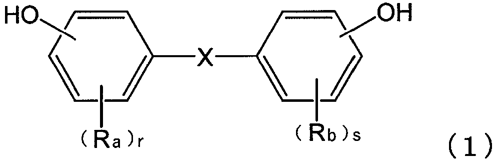

In formula (1), which represents the monomer as a raw material of the oligomer, Rₐ and R_{b} are each independently selected from hydrogen, fluorine, chlorine, bromine, iodine, or an optionally substituted alkyl group with 1-20 carbon atoms, aryl group with 6-12 carbon atoms, alkenyl group with 2-12 carbon atoms, alkoxy group with 1-5 carbon atoms, and aralkyl group with 7-17 carbon atoms.

Each of Rₐ and R_{b} is preferably hydrogen, or an optionally substituted alkyl group with 1-12 carbon atoms or aryl group with 6-10 carbon atoms, more preferably hydrogen or an optically substituted alkyl group with 1-6 carbon atoms, still more preferably hydrogen or an optically substituted alkyl group with 1-3 carbon atoms, and particularly preferably hydrogen.

In formula (1), which represents the monomer as a raw material of the oligomer, r and s are each independently an integer from 0 to 4. Each of r and s is preferably an integer from 0 to 3, more preferably an integer from 0 to 2, still more preferably an integer of 0 or 1, and particularly preferably 0.

In formula (1), which represents the monomer as a raw material of the oligomer, X is represented by general formula (3) given below.

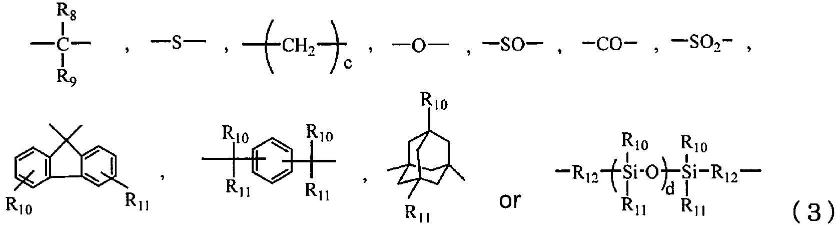

In formula (3), R₈ and R₉ are each independently any of hydrogen, fluorine, chlorine, bromine, iodine, or an optionally substituted alkyl group with 1-20 carbon atoms, alkoxy group with 1-5 carbon atoms, and aryl group with 6-12 carbon atoms, or R₈ and R₉ may be bonded to form a carbocyclic ring with 5-20 carbon atoms or a 5-12-membered heterocyclic ring.

R₈ and R₉ are preferably hydrogen, an alkyl group with 1-3 carbon atoms, or groups that are bonded to each other to form a carbocyclic ring with 5-12 carbon atoms.

In formula (3), R₁₀ and R₁₁ are each independently any of hydrogen, fluorine, chlorine, bromine, iodine, or an optionally substituted alkyl group with 1-9 carbon atoms, alkoxy group with 1-5 carbon atoms, alkenyl group with 2-12 carbon atoms, and aryl group with 6-12 carbon atoms. Each of R₁₀ and R₁₁ is preferably hydrogen or an aryl group with 6-8 carbon atoms,

In formula (3), R₁₂ is each independently an optionally substituted alkylene group with 1-9 carbon atoms, preferably a alkylene group with 1-3 carbon atoms, still more preferably an alkylene group with 1 or 2 carbon atoms.

In formula (3), c is an integer from 0 to 20, and d is an integer from 1 to 500.
c is preferably an integer from 0 to 10, more preferably an integer from 0 to 3.
d is preferably an integer from 1 to 300, more preferably an integer from 1 to 100.

The substituent contained in the above monomer compound or the first structural unit (A) is each independently selected from halogen, a hydroxy group, a cyano group, an alkyl group with 1-20 carbon atoms, an alkenyl group with 1-20 carbon atoms, an aryl group with 6-12 carbon atoms, and the like. When the alkyl group, the alkenyl group, and the aryl group are contained as the substituent, the above number of carbon atoms is the total number of carbon atoms including a carbon atom of the substituent.

Specific examples of the above monomer compound forming the first structural unit (A) include, but are not limited to, 2,2-bis(4-hydroxyphenyl)propane (bisphenol A; BPA), 2,2-bis(4-hydroxy-3-methylphenyl)propane, 4,4'-biphenyldiol, bis(4-hydroxyphenyl)methane (bisphenol F; BPF), bis(2-hydroxyphenyl)methane, 2,4'-dihydroxydiphenylmethane, bis(4-hydroxyphenyl) ether, bis(4-hydroxyphenyl)sulfone, 2,4'-dihydroxydiphenylsulfone, bis(2-hydroxyphenyl)sulfone, bis(4-hydroxy-3-methylphenyl)sulfone, bis(4-hydroxyphenyl) sulfoxide, bis(4-hydroxyphenyl) sulfide, bis(4-hydroxyphenyl) ketone, 1,1-bis(4-hydroxyphenyl)ethane (bisphenol E; BPE), 1,1-bis(4-hydroxyphenyl)-1-phenylethane (bisphenol AP; BPAP), bis(4-hydroxyphenyl)diphenylmethane (bisphenol BP; BPBP), 1,1-bis(4-hydroxy-3-methylphenyl)ethane, bis(4-hydroxy-3-methylphenyl)methane, 2,2-bis(4-hydroxy-3-t-butylphenyl)propane, 2,2-bis(4-hydroxyphenyl)butane (bisphenol B; BPB), 1,1-bis(4-hydroxyphenyl)cyclohexane (bisphenol Z; BPZ), 1,1-bis(4-hydroxy-3-methylphenyl)cyclohexane, 1,1-bis(4-hydroxyphenyl)cycloundecane, 1,1-bis(4-hydroxyphenyl)cyclododecane (bisphenol CD), 2,2-bis(4-hydroxy-3-allylphenyl)propane, 3,3,5-trimethyl-1,1-bis(4-hydroxyphenyl)cyclohexane, 9,9-bis(4-hydroxy-3-ethylphenyl)fluorene, 9,9-bis(4-hydroxy-3-methylphenyl)fluorene, 9,9-bis(4-hydroxyphenyl)fluorene, α,ω-bis[3-(o-hydroxyphenyl)propyl]polydimethyldiphenyl random copolymer siloxane, α,ω-bis[3-(o-hydroxyphenyl)propyl]polydimethylsiloxane, 4,4'-[1,4-phenylenebis(1-methylethylidene)]bisphenol, 4,4'-[1,3-phenylenebis(1-methylethylidene)]bisphenol, 2,2-bis(4-hydroxy-3-isopropylphenyl)propane (bisphenol G), 1,1-bis(4-hydroxyphenyl)-2-ethylhexane (bisphenol IOTD), 1,1-bis(4-hydroxyphenyl)-2-methylpropane (bisphenol IBTD), 1,1-bis(4-hydroxyphenyl)-2-methylpentane (bisphenol MIBK), 5,5'-(1-methylethylidene)-bis[1,1'-(bisphenyl)-2-ol]propane (bisphenol PH), 1,1-bis(4-hydroxyphenyl)-3,3,5-trimethylcyclohexane (bisphenol TMC), 2,2-bis(4-hydroxyphenyl)-4-methylpentane, 1,1-bis(4-hydroxyphenyl)decane, and 1,3-bis(4-hydroxyphenyl)-5,7-dimethyladamantane. Only one type of these may be used, or two or more types thereof may be used in combination.

More preferred specific examples of the monomer compound include 2,2-bis(4-hydroxyphenyl)propane (bisphenol A; BPA), 2,2-bis(4-hydroxy-3-methylphenyl)propane, and 4,4'-biphenyldiol, bis(4-hydroxyphenyl)methane (bisphenol F; BPF).

The weight average molecular weight (Mw) of the oligomer is 500-20,000, for example, 500 or more or more than 500 and 20,000 or less or less than 20,000. The Mw value of the oligomer is preferably 600-15,000 or 800-18,000, more preferably 700-12,000 or 900-14,000, still more preferably 800-8,000 or 950-10,000, and particularly preferably 900-4,000, 950-6,000 or 1,000-5,000.

### 1-3. Polycarbonate resin (thermoplastic resin)

The resin composition comprises a polycarbonate resin having a second structural unit (B). The resin composition may further comprise any of a polyester resin and a polyester carbonate resin having the second structural unit (B), and may comprise a thermoplastic resin other than the polycarbonate resin, the thermoplastic resin having the second structural unit (B).

The thermoplastic resin, such as the polycarbonate resin, serving as a component of the resin composition comprises a second structural unit (B) derived from a monomer which is a fluorenic compound represented by at least any of general formulas (2a)-(2c) below. Specifically, the polycarbonate resin comprises a second structural unit (B) which is bonded to another structural unit via O of a hydroxy group of a diol compound represented by any of formulas (2a)-(2c).

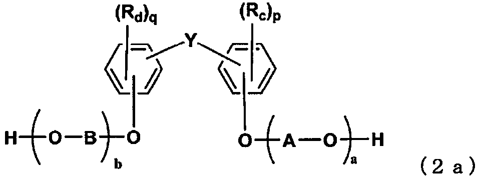

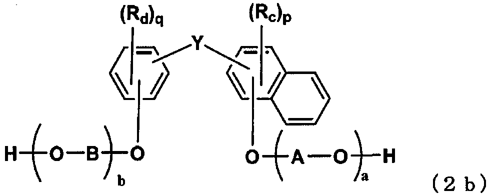

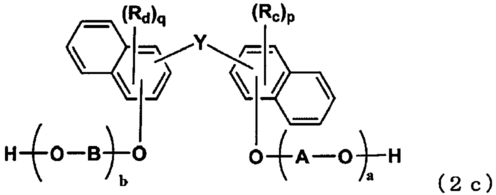

In general formulas (2a)-(2c),
R_{c} and R_{d} are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, and an optionally substituted aryl group with 6-20 carbon atoms.

R_{c} and R_{d} in general formulas (2a)-(2c) are each independently preferably selected from a hydrogen atom, an optionally substituted alkyl group with 1-20 carbon atoms, an optionally substituted alkoxyl group with 1-20 carbon atoms, an optionally substituted cycloalkyl group with 5-20 carbon atoms, and an optionally substituted aryl group with 6-20 carbon atoms, and more preferably selected from a hydrogen atom, an optionally substituted alkyl group with 1-20 carbon atoms, and an optionally substituted aryl group with 6-20 carbon atoms. R_{c} and R_{d} are still more preferably selected from a hydrogen atom and an optionally substituted aryl group with 6-20 carbon atoms.

In general formulas (2a)-(2c), Y are each independently an optionally substituted fluorene group.

In general formulas (2a)-(2c), A and B each independently represent an optionally substituted alkylene group with 1-5 carbon atoms, preferably an optionally substituted alkylene group with 1-3 carbon atoms, and more preferably an optionally substituted alkylene group with 1 or 2 carbon atoms.

In general formulas (2a)-(2c), p and q are each independently an integer from 0 to 4, preferably an integer from 0 to 3, and more preferably 0 or 1.

Additionally, in general formulas (2a)-(2c), a and b are each independently an integer from 0 to 10, preferably an integer from 0 to 5, still more preferably an integer from 0 to 3, and particularly preferably 0 or 1.

Among the selections for R_{c} and R_{d} in general formulas (2a)-(2c), the number of carbon atoms in each of the optionally substituted alkyl group with 1-20 carbon atoms and the optionally substituted alkoxyl group with 1-20 carbon atoms is preferably 1-10, more preferably 1-6, and still more preferably 1-3 or 1.

Among the selections for R_{c} and R_{d} in general formulas (2a)-(2c), the number of carbon atoms in each of the optionally substituted cycloalkyl group with 5-20 carbon atoms and the optionally substituted cycloalkoxyl group with 5-20 carbon atoms is preferably 5-10, more preferably 6-8, and still more preferably 6 or 7.

Among the selections for R_{c} and R_{d} in general formulas (2a)-(2c), the number of carbon atoms in the optionally substituted aryl group with 6-20 carbon atoms is preferably 6-12, more preferably 6-10, and still more preferably 6-8 or 6.

The resin composition comprises a thermoplastic resin such as a polycarbonate resin represented by any of formulas (2a)-(2c), and preferably comprises at least a polycarbonate resin having a structural unit represented by formula (2a).

Examples of the above substituent that can be contained in the structural unit (B) formed by the fluorene compounds of formulas (2a)-(2c) above include a halogen atom, a hydroxy group, a carboxy group, a cyano group, an amide group with 1-10 carbon atoms, an alkyl group with 1-10 carbon atoms, a cycloalkyl group with 5-10 carbon atoms, an alkoxy group with 1-10 carbon atoms, a cycloalkyloxy group with 5-10 carbon atoms, an alkyloxycarbonyl group with 2-10 carbon atoms, a cycloalkyloxycarbonyl group with 5-10 carbon atoms, an aryloxycarbonyl group with 7-15 carbon atoms, an alkylcarbonyloxy group with 2-10 carbon atoms, a cycloalkylcarbonyloxy group with 5-10 carbon atoms, an arylcarbonyloxy group with 7-15 carbon atoms, a hydroxyalkylcarbonyl group with 2-10 carbon atoms, and a glycidyloxycarbonyl group. The number of carbon atoms relating to the fluorene compounds of general formulas (2a)-(2c) also includes the number of carbon atoms in the substituent.

Specific examples of the above fluorenic diol compound forming the second structural unit (B) include 9,9-bis(4-(2-hydroxyethoxy)phenyl)fluorene (BPEF), 9,9-bis(6-(2-hydroxyethoxy)naphthalen-2-yl)fluorene (BNEF), and 9,9-bis(4-(2-hydroxyethoxy)-3-phenylphenylfluorene (BPPEF)). These fluorenic diol compounds may be used alone or in combination of two or more to form the structural unit (B).

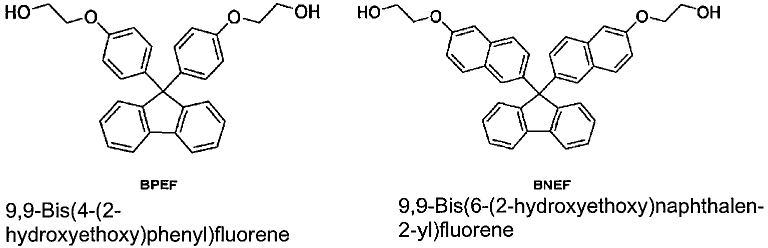

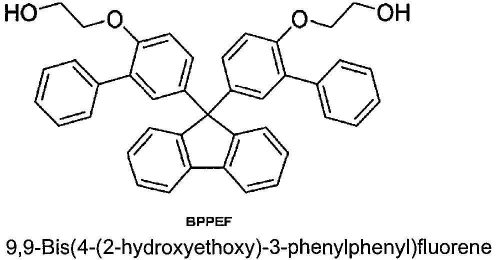

The weight average molecular weight (Mw) of the thermoplastic resin such as the polycarbonate resin is 20,000-300,000, for example, 20,000 or more and more than 20,000 and 300,000 or less or less than 300,000.

The Mw value of the thermoplastic resin such as the polycarbonate resin is preferably 22,000-200,000 or 24,000-250,000, more preferably 23,000-100,000 or 25,000-120,000, still more preferably 24,000-60,000 or 26,000-80,000, and particularly preferably 27,000-40,000, 28,000-50,000, or 30,000-38,000.

### 1-4. Secondary component

The resin composition may comprise components other than the oligomer and the thermoplastic resin. Examples include at least one additive selected from an antioxidant, a mold release agent, and the like. The resin composition preferably comprises either or both of an antioxidant and a mold release agent.

In the resin composition, the content of secondary components such as additives other than oligomers and resins is preferably 20 wt% or less, more preferably 15 wt% or less or 10 wt% or less, still more preferably 7 wt% or less or 5 wt% or less, and particularly preferably 3 wt% or less or 2 wt% or less relative to the total weight of the resin composition.

Specific examples of additives comprised in the resin composition include the following.

### Antioxidant

Examples of the antioxidant include a phenolic antioxidant, a hindered phenolic antioxidant, a bisphenol-based antioxidant, and a polyphenolic antioxidant.

Specifically, examples include 2,6-di-tert-butyl-4-methylphenol, tris(3,5-di-tert-butyl-4-hydroxybenzyl)isocyanurate, n-octadecyl-3-(3',5'-di-tert-butyl-4'-hydroxyphenyl)propionate, tetrakis[methylene-3-(3,5-di-tert-butyl-4-hydroxyphenyl)propionate]methane, 4,4'-butylidenebis-(3-methyl-6-tert-butylphenol), triethylene glycol-bis[3-(3-tert-butyl-4-hydroxy-5-methylphenyl)propionate], 3,9-bis{2-[3-(3-tert-butyl-4-hydroxy-5-methylphenyl)propionyloxy]-1,1-dimethylethyl}-2,4,8,10-tetraoxaspiro[5,5]undecane, pentaerythritol tetrakis[3-(3,5-di-tert-butyl-4-hydroxyphenyl)propionate], thiodiethylenebis[3-(3,5-di-tert-butyl-4-hydroxyphenyl)propionate], N,N'-hexane-1,6-diylbis[3-(3,5-di-tert-butyl-4-hydroxyphenylpropionamide)], 2,4-dimethyl-6-(1-methylpentadecyl)phenol, diethyl[[3,5-bis(1,1- dimethylethyl)-4-hydroxyphenyl]methyl]phosphoate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazine-2-ylamino)phenol.

The proportion of the antioxidant added is preferably 0.001 parts by mass or more, more preferably 0.01 parts by mass or more, and preferably 1 part by mass or less, more preferably 0.5 parts by mass or less, relative to 100 parts by mass of the resin composition.

In the resin composition, only one type of antioxidant may be contained, or two or more types may be contained. When two or more types of antioxidants are contained, the total amount of them is preferably within the above range.

### Mold release agent

Examples of the mold release agent include carboxylic acid esters, polysiloxane compounds, and paraffin wax (polyolefin-based) mold release agents. Specifically, examples include at least one compound selected from the group consisting of aliphatic carboxylic acids, esters of aliphatic carboxylic acids and alcohols, aliphatic hydrocarbon compounds with a number average molecular weight of 200-15,000, and polysiloxane-based silicone oils. Examples of aliphatic carboxylic acids include saturated or unsaturated aliphatic monovalent, divalent or trivalent carboxylic acids. Here, aliphatic carboxylic acids also include alicyclic carboxylic acids. Among these, aliphatic carboxylic acids are preferably monovalent or divalent carboxylic acids with 6-36 carbon atoms, and more preferably saturated aliphatic monovalent carboxylic acids with 6-36 carbon atoms. Specific examples of the aliphatic carboxylic acid include palmitic acid, stearic acid, valeric acid, caproic acid, capric acid, lauric acid, arachidic acid, behenic acid, lignoceric acid, cerotic acid, melissic acid, tetratriacontanoic acid, montanic acid, glutaric acid, adipic acid, and azelaic acid. The same aliphatic carboxylic acid as those mentioned above can also be used as the aliphatic carboxylic acid in the ester of an aliphatic carboxylic acid and an alcohol. Meanwhile, examples of the alcohol include saturated or unsaturated monohydric or polyhydric alcohols. These alcohols may have a substituent such as a fluorine atom or an aryl group. Among these, saturated monohydric or polyhydric alcohols with 30 or less carbon atoms are preferred, and saturated aliphatic monohydric or polyhydric alcohols with 30 or less carbon atoms are more preferred. Here, aliphatic compounds also includes alicyclic compounds. Specific examples of the alcohol include octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane, and dipentaerythritol.

The ester compound described above may contain an aliphatic carboxylic acid and/or an alcohol as impurities and may be a mixture of multiple compounds. Specific examples of the ester of an aliphatic carboxylic acid and an alcohol include beeswax (a mixture consisting mainly of myristyl palmitate), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, and pentaerythritol tetrastearate. Examples of the aliphatic hydrocarbon with a number average molecular weight of 200-15,000 include liquid paraffin, paraffin wax, microcrystalline wax, polyethylene wax, Fischer-Tropsch wax, and an α-olefin oligomer with 3-12 carbon atoms. Here, aliphatic hydrocarbons also include alicyclic hydrocarbons. These hydrocarbon compounds may also be partially oxidized. Among these, paraffin wax, polyethylene wax or a partial oxide of polyethylene wax is preferred, and paraffin wax or polyethylene wax is more preferred. The number average molecular weight is preferably 200-5,000. These aliphatic hydrocarbons may be a single substance or a mixture of various components and molecular weights, as long as the main component is within the above range. Examples of the polysiloxane-based silicone oil include dimethyl silicone oil, phenyl methyl silicone oil, diphenyl silicone oil, and fluorinated alkyl silicone. Two or more of these may be used in combination.

The proportion of the mold release agent added is preferably 0.001 parts by mass or more, more preferably 0.01 parts by mass or more, and preferably 2 parts by mass or less, more preferably 1 part by mass or less, relative to 100 parts by mass of the resin composition.

Only one type or two or more types of mold release agents may be used. When two or more types are used, the total amount of them is preferably within the above range.

### 1-5. Component ratio of resin composition

In the resin composition, the content of the oligomer relative to the total mass of the resin composition is preferably 0.5-18 wt%. The content of the oligomer in the resin composition is more preferably 1.0-15 wt% or 2.0-16 wt%, still more preferably 3.0-12 wt% or 4.0-14 wt%, and particularly preferably 5.0-10 wt% or 6.0-12 wt%.

In the resin composition, the mass ratio between the thermoplastic resin such as the polycarbonate resin and the oligomer (e.g., BPEF-PC:BPA-Olig mass ratio) is preferably 80:20-99:1, more preferably 85:15-98:2, still more preferably 88:12-96:4, and particularly preferably 90:10-95:5.

In the resin composition, the total content of the oligomer and the resins is preferably 80 wt% or more, more preferably 85 wt% or more or 90 wt% or more, still more preferably 93 wt% or more or 95 wt% or more, and particularly preferably 97 wt% or more or 98 wt% or more, relative to the total weight of the resin composition. The resin composition may be substantially formed from only the oligomer and the resins.

### 1-6. Properties of resin composition

The value of glass transition temperature (Tg) of the resin composition according to JIS K7121-1987 is preferably 100-200°C, more preferably 110-180°C, still more preferably 120-160°C, and particularly preferably 130-150°C.

The average phase difference value of the resin composition is preferably 40 nm or less, more preferably 30 nm or less or 24 nm or less, still more preferably 20 nm or less or 16 nm or less, and particularly preferably 14 nm or less or 12 nm or less.

A method for measuring the average phase difference value of a lens which is a molded article will be described below, and the average phase difference value of the resin composition can also be measured by the same measurement method thereas.

### <2. Method for producing resin composition>

### 2-1. Step of producing oligomer and thermoplastic resin

The oligomer and the thermoplastic resin such as the polycarbonate resin are produced by a method below.

The oligomer and the polycarbonate resin can be produced, for example, by reacting a raw material compound, such as bisphenols or fluorenediols, which induces the first or second structural unit (A) or (B), and a carbonic acid ester forming compound. A known method, for example, a method such as a direct reaction (phosgene technique) between bisphenols or fluorenediols and phosgene, or a transesterification reaction (transesterification technique) between bisphenols or fluorenediols and bisaryl carbonate, can be adopted.

In the phosgene technique, for example, bisphenols or fluorenediols inducing the structural unit (A) or (B), and phosgene are usually reacted in the presence of an acid binding agent and a solvent. Examples of the acid binding agent used include pyridine and alkali metal hydroxides such as sodium hydroxide and potassium hydroxide. Examples of the solvent used include methylene chloride and chloroform. A catalyst, for example, tertiary amine such as triethylamine or a quaternary ammonium salt such as benzyl triethylammonium chloride, is preferably further used in order to accelerate a polycondensation reaction.

The degrees of polymerization, i.e., molecular weights, of the resulting oligomer and thermoplastic resin can be adjusted by adjusting the type, amount, and the like of a compound, such as monohydric phenol, which induces a terminal structure. In addition to the monohydric phenol, the terminal structure may be induced using monohydric phenol such as p-t-butylphenol, p-cumylphenol, or long-chain alkylsubstituted phenol. If desired, an antioxidant such as sodium sulfite or hydrosulfite, or a branching agent such as phloroglucinol or isatin bisphenol may be added in a small amount. The reaction is usually performed at 0-150°C, and preferably, the range of 5-40°C is appropriate. The reaction time, though depending on the reaction temperature, is usually 0.5 minutes to 10 hours and preferably 1 minute to 2 hours. During the reaction, the pH of the reaction system is desirably held at 10 or more.

On the other hand, in the transesterification technique, for example, bisphenol or fluorenic diol inducing the structural unit (A) or (B), and a compound such as monohydric phenol inducing a terminal structure, and bisaryl carbonate are mixed and reacted at a high temperature under reduced pressure.

Examples of the bisaryl carbonate include bisaryl carbonate such as diphenyl carbonate, di-p-tolyl carbonate, phenyl-p-tolyl carbonate, di-p-chlorophenyl carbonate, and dinaphthyl carbonate. Two or more types of these compounds may be used in combination.

A polymerization reaction in the transesterification technique is performed at a temperature in the range of usually 150-350°C and preferably 200-300°C, and the degree of pressure reduction is finally made to preferably 1 mmHg or less. Phenols originating from the bisaryl carbonate, an excess of unreacted bisaryl carbonate, and the like from the transesterification reaction are preferably distilled off to the outside of the system by adjusting the reaction conditions as described above. The reaction time, though depending on the reaction temperature, the degree of pressure reduction, and the like, is usually on the order of 1-24 hours. The reaction is preferably performed in an inert gas (e.g., nitrogen or argon) atmosphere. If desired, the reaction may be performed by further using a small amount of a molecular weight adjusting agent other than the compound such as the monohydric phenol inducing a terminal structure or adding an antioxidant or a branching agent.

The oligomer or the polycarbonate resin may be produced by adopting melt polycondensation, with a by-product removed, through a transesterification reaction at normal pressure under heating or under reduced pressure using a raw material which is a bisphenol compound or fluorenic diol inducing the structural unit (A) or (B), and a catalyst. The reaction in the melt polycondensation step is generally carried out by a process of two or more multiple stages.

Specifically, the reaction at the first stage is performed at a temperature of 120-220°C and preferably 160-200°C and a pressure of normal pressure to 200 Torr for 0.1-5 hours and preferably 0.5-3 hours. Subsequently, while the temperature is gradually elevated to a final temperature of 230-260°C over 1-3 hours, the pressure is gradually reduced to a final pressure of 1 Torr or less, and the reaction is continued. Finally, the polycondensation reaction is allowed to progress at a temperature of 230-260°C under reduced pressure of 1 Torr or less, followed by pressure recovery with nitrogen until reaching a predetermined viscosity to terminate the reaction. The reaction time at 1 Torr or less is, for example, 0.1-2 hours, and the total reaction time is, for example, 1-6 hours and usually 2-5 hours.

Of the thermoplastic resin and the oligomer, particularly, the thermoplastic resin may have, as impurities, an alcoholic compound such as a phenolic compound that may be formed as a by-product during production as described above, or a diol component or carbonic acid diester remaining without reacting. The alcoholic compound such as the phenolic compound and the carbonic acid diester serving as impurities may become responsible for reduction in strength of the resulting molded body, or odor generation. It is therefore preferred to minimize the contents of these impurities.

The content of the phenolic compound remaining in the thermoplastic resin is preferably 3000 ppm by mass or less, more preferably 1000 ppm by mass or less, and particularly preferably 300 ppm by mass or less, relative to 100 wt% of the thermoplastic resin.

The content of the diol component remaining in the thermoplastic resin is preferably 1000 ppm by mass or less, more preferably 100 ppm by mass or less, and particularly preferably 10 ppm by mass or less, relative to 100 wt% of the thermoplastic resin.

The content of the carbonic acid diester remaining in the thermoplastic resin is preferably 1000 ppm by mass or less, more preferably 100 ppm by mass or less, and particularly preferably 10 ppm by mass or less, relative to 100 wt% of the thermoplastic resin.

Particularly, a small content of compounds such as phenol and t-butylphenol is preferred, and the content of these compounds is preferably within the above range.

The content of the phenolic compound remaining in the thermoplastic resin can be measured by an approach of analyzing the phenolic compound extracted from the thermoplastic resin using gas chromatography.

The content of the alcoholic compound remaining in the thermoplastic resin can also be measured by an approach of analyzing the alcoholic compound extracted from the thermoplastic resin using gas chromatography. The contents of the diol component and the carbonic acid diester remaining in the thermoplastic resin can also be measured by an approach of extracting these compounds from the thermoplastic resin and analyzing them using gas chromatography.

Although the contents of the by-produced alcoholic compound (e.g., phenolic compound), diol component, and carbonic acid diester may be decreased to the extent that they are not detectable, these by-products may be slightly contained without impairing effects, from the viewpoint of productivity. Furthermore, these by-products can also make plasticity good during melting of the thermoplastic resin as long as the by-products are in slight amounts.

The respective contents of the phenolic compound, the diol component, and the carbonic acid diester remaining in the thermoplastic resin may be, for example, 0.01 ppm by mass or more, 0.1 ppm by mass or more, or 1 ppm by mass or more relative to 100 wt% of the thermoplastic resin.

The content of the alcoholic compound remaining in the thermoplastic resin may be, for example, 0.01 ppm by mass or more, 0.1 ppm by mass or more, or 1 ppm by mass or more relative to 100 wt% of the thermoplastic resin.

The contents of the by-produced alcoholic compound (e.g., phenolic compound), diol component, and carbonic acid diester in the thermoplastic resin may be adjusted to the above range by appropriately adjusting the conditions of polycondensation and the setting of an apparatus. The contents may also be adjusted depending on the conditions of an extrusion step after polycondensation.

For example, the amount of the by-produced alcoholic compound (e.g., phenolic compound) remaining is associated with the type of the carbonic acid diester for use in polymerization for the thermoplastic resin, the polymerization reaction temperature and the polymerization pressure, etc. The amount of the by-produced alcoholic compound (e.g., phenolic compound) remaining can be decreased by adjusting them.

For example, when the thermoplastic resin is produced using dialkyl carbonate such as diethyl carbonate, the resulting thermoplastic resin has a low molecular weight due to difficult elevation in molecular weight and tends to have a high content of a by-produced alkyl alcoholic compound. Such an alkyl alcohol is highly volatile and tends to deteriorate the moldability of the resin if remaining in the thermoplastic resin. A large amount of the by-produced alcoholic compound (e.g., phenolic compound) remaining might cause an odor problem during molding of the resin or might cause decrease in molecular weight through the progression of the cleavage reaction of the resin backbone during compounding. Thus, the content of the by-produced alcoholic compound remaining in the obtained thermoplastic resin is preferably 3000 ppm by mass or less relative to the thermoplastic resin (100 wt%). The content of the alcoholic compound remaining is preferably 3000 ppm by mass or less, more preferably 1000 ppm by mass or less, and particularly preferably 300 ppm by mass or less, relative to 100 wt% of the thermoplastic resin.

### 2-2. Melting and extrusion steps

The resin composition is preferably produced by the step of melting and mixing the oligomer and the thermoplastic resin such as the polycarbonate resin obtained by the above steps. The melting step for the production of the resin composition may be performed by, for example, any of a method of mixing the respective solids of the oligomer and the polycarbonate resin and kneading the mixture with a kneader, a method of adding the solid polycarbonate resin to the oligomer in a melted state, followed by kneading, a method of adding the solid oligomer to the polycarbonate resin in a melted state, followed by kneading, and a method of mixing and kneading the oligomer and the polycarbonate resin in a melted state. The kneading step may be based on either of a continuous system or a batch system.

The method for producing the resin composition preferably comprises a melt extrusion step of melting and extruding the oligomer and the resin. In the melt extrusion step, a continuous extruder is suitably used, and Labo Plastomill, a kneader, or the like can be used in a batch process. The step of melting and kneading the oligomer and the resin may be carried out after the catalysts used in the respective polymerization steps for the oligomer and the resin are deactivated, or may be carried out without deactivating these catalysts. Catalyst deactivators for deactivating the catalysts may be added to the oligomer and the resin, respectively, before melting and kneading, and the oligomer and the resin can then be melted and kneaded, or the catalyst deactivators may be added at the start of the kneading step to the oligomer and the resin, which are then kneaded. Additives other than the catalyst deactivators may be added at the same timing or a different timing as or from that of the catalyst deactivators. The additives other than the catalyst deactivators may be added to the oligomer alone, the resin alone, or a mixture of the oligomer and the resin.

A method for adding the catalyst deactivators, other additives, and the like is not particularly limited. For example, the kneading step with the resin may be carried out after the catalyst deactivators and other additives are mixed with and impregnated into the oligomer, or the kneading step may be carried out after the catalyst deactivators and other additives are mixed with and impregnated into the resin. The catalyst deactivators and other additives may be dissolved together in an alcohol such as methanol or ethanol, an organic solvent exemplified by acetone, toluene, phenol, or the like, water, or any of other solvents, and the resulting melted form can be mixed with the oligomer or the resin, followed by kneading. Solutions obtained by dissolving the catalyst deactivators and the additives on a component basis in the same type or different types of solvents may be added to the oligomer or the resin, followed by kneading.

In the melt extrusion step for the resin composition, for example, the oligomer, the thermoplastic resin, and additives are melt-mixed, and the mixture is added to a melt kneading apparatus and kneaded. In the melt kneading step, it is preferred to continuously add the raw materials such as the polycarbonate resin and the oligomer, and it is preferred to continuously add the raw materials to a cylinder of a kneading apparatus using, for example, a rotary feeder.

As for operating conditions for kneading in a melt kneading apparatus, the speed of a screw disposed in the cylinder is preferably 200 rpm or more, more preferably 250 rpm or more, still more preferably 275 rpm or more, and adjusted to, for example, 300 rpm. For example, a rotary feeder is suitably used for the addition of the raw materials to the melt kneading apparatus. The rotary feeder speed as a set condition for the addition of the raw materials is preferably 6-10 rpm and adjusted to, for example, 8 rpm.

The heating temperature of the mixture of the oligomer, the thermoplastic resin, and the like in the melt kneading step is preferably 270°C or higher and adjusted to, for example, 275°C.

If the polycarbonate resin having the second structural unit (B) obtained from the fluorenic monomer is melt-kneaded alone, the conditions for the above melt kneading apparatus can be set to, for example, a screw speed of 100 rpm, a feeder speed of 15 rpm, and a cylinder temperature of 260°C. However, such a melt extrusion step using an alloy of the polycarbonate resin and the oligomer is apt to cause poor appearance such as white turbidity. It is thus preferred to adjust the melt kneading conditions to conditions involving a higher internal temperature of the apparatus, i.e., a higher heating temperature for the mixture, a longer residence time in the kneading apparatus, and higher shear as compared with the above step of melt-kneading the polycarbonate resin alone.

According to Examples which will be described below in detail, a lens with no conspicuous white turbidity in visual appearance, a suppressed phase difference, and low birefringence was able to be produced by injection molding using the resin composition obtained under thus-adjusted melt kneading conditions.

The method for producing the resin composition may adopt the step of dissolving the oligomer and the resin in a solvent, casting the solution into a mold, and then evaporating the solvent. Examples of the solvent used include methylene chloride, chloroform, and cresol. In this method, additives may be dissolved and added at the same time with the oligomer and the resin. When the resin composition is supplemented, if necessary, with, for example, an antioxidant, a mold release agent, an ultraviolet absorber, a flowability modifier, a reinforcing agent, a crystal nucleating agent, a dye, an antistatic agent, or an antimicrobial agent, these additives may be added beforehand to each or any one of the oligomer and the polycarbonate resin before kneading, may be added and kneaded into them at the same time during blend kneading, or may be kneaded into the mixture thereof.

### <3. Optical material>

The resin composition of the present invention is suitably used as a material for forming an optical component by curing into a predetermined shape. Specifically, the resin composition is suitable for use as an optical material.

The resin composition of the present invention used as an optical material or the optical material of the resin composition supplemented with proper additives and the like can produce an optical member having excellent appearance and good properties such as a suppressed phase difference.

### <4. Molded article>

A molded article of the present invention is obtained by molding the above resin composition. Specifically, the molded article comprises the resin composition of the present invention and is formed in a predetermined shape. Such a molded article is excellent in appearance with suppressed surface asperities, and has good properties such as a small phase difference.

In the molded article, for example, the average phase difference value measured by a method described below is preferably 40 nm or less, more preferably 30 nm or less or 24 nm or less, still more preferably 20 nm or less or 16 nm or less, and particularly preferably 14 nm or less or 12 nm or less.

Examples of the molded article include articles obtained by processing the resin composition by extrusion molding, blow molding, injection molding, or the like, for example, extruded articles, hollow molded articles, and injection molded products such as precision parts and thin objects.

Specific examples of molded articles using the thermoplastic resin as an optical material include optical components such as optical lenses, optical films, various films for liquid crystal displays, light guide plates, optical disc substrates, etc., and housings for electronic devices such as smartphones.

### Examples

### [Analysis method]

### 1) Weight average molecular weight (Mw)

Polystyrene-equivalent molecular weights (Mw) of a polycarbonate resin or poly carbonate resin compositions were measured under conditions below with a gel permeation chromatograph (GPC).

### Measurement conditions

Measurement instrument: HLC-8320GPC from Tosoh Corporation
Column: Shodex K-G + K-805L x 2 + K-800D
Eluent; Chloroform
Temperature: Column thermostat of 40°C
Flow rate: 1.0 ml/min
Concentration: 0.1 wt/vol%
Injection volume: 100 µl
Pretreatment: Filtration through a 0.45 µm filter
Detector: UV refractometer
Standard polystyrene resin: EasiCal Type PS-1 polystyrene from GL Sciences Inc.

### 2) Glass transition temperature (Tg)

Glass transition temperature was measured in accordance with JIS K7121-1987, using a differential thermal scanning calorimeter with a temperature increase program of 10°C/min.

Differential thermal scanning calorimeter: X-DSC7000 from Hitachi High-Tech Science Corporation

### 3) Phase difference of molded lens

Each polycarbonate resin composition was dried at 120°C for 8 hours, and a flat convex lens having a diameter of 50 mm, a central thickness of 6 mm, and a circumferential thickness of 2 mm was obtained by injection molding.

### Molding conditions;

Molding machine: Injection molding machine S-2000i30A (30 t) from Fanuc Corporation
Molding conditions;
   Cylinder temperature; 270°C
   Mold temperature; Resin Tg - 15°C

The obtained lens specimen was subjected to annealing treatment under conditions below.

### Annealing conditions:

Annealing temperature: Resin Tg - 20°C
Annealing time: 24 hours

A phase difference in the lens molded article after annealing treatment was measured with two-dimensional birefringence measurement apparatus WPA-100 from Photonic Lattice, Inc.

### 4) Appearance evaluation of molded lens

The lens molded article in a flat convex shape prepared by the approach described in the above section 3) Phase difference of molded lens was evaluated for its appearance in accordance with criteria below.

Excellent: Poor grain-like appearance and phase separation of molded article surface are absent.

Good: Poor grain-like appearance and phase separation of molded article surface are rarely present.

Fair: Poor grain-like appearance and phase separation of molded article surface are present.

The grain refers to a very small swelling or protrusion (blister) appearing on the surface of the molded article.

### [Synthesis Example 1: Oligomer]

### (Step 1)

5,000 g of 2,2'-bis(4-hydroxyphenyl)propane (BPA: from Mitsubishi Chemical Corporation) was placed as a raw material in 31 L of a 9 w/w% aqueous sodium hydroxide solution and dissolved by further adding 6 g of hydrosulfite. 20 L of dichloromethane was added to the solution, and 3,040 g of phosgene was further brown thereinto over 30 minutes with stirring at a dissolution temperature set to 20°C.

### (Step 2)

After the completion of blowing of phosgene, 940 g of p-tert-butylphenol (PTBP) dissolved in 5 L of dichloromethane was added thereto, and the mixture was emulsified by vigorous stirring for 7 minutes. Then, 20 ml of triethylamine was added thereto as a polymerization catalyst, followed by polymerization for approximately 30 minutes.

### (Subsequent step)

The polymer solution was separated into an aqueous layer and an organic layer, and the organic layer was neutralized with phosphoric acid and repetitively washed with pure water until the pH of the washes became 7.0. The organic solvent was distilled off by evaporation from this purified polycarbonate resin solution to obtain a powder of a BPA oligomer (BPA-Olig). This oligomer powder was dried at 100°C for 24 hours to completely distill off the solvent. The obtained BPA oligomer (BPA-Olig) had a molecular weight (Mw) of 4500.

### [Synthesis Example 2: Oligomer]

A BPA oligomer (BPA-Olig) having a molecular weight (Mw) of 1500 was obtained in the same manner as in Synthesis Example 1 except that the amount of PTBP used was changed to 1,316 g.

### [Synthesis Example 3: Oligomer]

A BPA oligomer (BPA-Olig) having a molecular weight (Mw) of 10000 was obtained in the same manner as in Synthesis Example 1 except that the amount of PTBP used was changed to 387.1 g.

### [Synthesis Example 4: Oligomer]

A BPA oligomer (BPA-Olig) having a molecular weight (Mw) of 800 was obtained in the same manner as in Synthesis Example 1 except that the amount of PTBP used was changed to 2,193.4 g.

### [Synthesis Example 5: Oligomer]

A BPA oligomer (BPA-Olig) having a molecular weight (Mw) of 18000 was obtained in the same manner as in Synthesis Example 1 except that the amount of PTBP used was changed to 205.6 g.

### [Polymerization Example 1: Polycarbonate resin]

39455 g (89.97 mol) of 9,9-bis(4-(2-hydroxyethoxy)phenyl)fluorene (BPEF), 19907 g (92.93 mol) of diphenyl carbonate (DPC), and 1.08 ml (1.08 × 10⁻³ mol, i.e., 1.20 × 10⁻⁵ mol relative to 1 mol in total of dihydroxy compounds) of a 0.10 mol/L aqueous sodium bicarbonate solution were placed as raw materials in a 50-liter reactor equipped with a stirrer and a distillation unit, heated to 215°C over 1 hour in a nitrogen atmosphere at 760 Torr, and stirred.

Then, the degree of pressure reduction was adjusted to 150 Torr over 10 minutes, and the reaction system was held under conditions of 215°C and 150 Torr for 20 minutes for a transesterification reaction. The reaction system was further heated to 240°C at a rate of 37.5°C/hr and held at 240°C and 150 Torr for 10 minutes. Then, the pressures was adjusted to 120 Torr over 10 minutes, and the reaction system was held at 240°C and 120 Torr for 70 minutes. Then, the pressures was adjusted to 100 Torr over 10 minutes, and the reaction system was held at 240°C and 100 Torr for 10 minutes. The pressures was further made to 1 Torr or less over 40 minutes, and a polymerization reaction was performed with stirring under conditions of 240°C and 1 Torr or less for 10 minutes. After the reaction was complete, nitrogen was blown into the reactor to apply pressure to remove the generated polycarbonate resin (BPEF-PC).

### [Example 1: Resin composition]

10 g of a hindered phenolic antioxidant (AO-60 from ADEKA Corporation), 3 g of a phosphitic antioxidant (PEP-36 from ADEKA Corporation), and 15 g of a mold release agent glycerin monostearate (S-100A from Riken Vitamin Co., Ltd.) were added to a mixture of 0.74 kg of the BPA oligomer (BPA-Olig) obtained in Synthesis Example 1 and 9.26 kg of the polycarbonate resin (BPEF-PC) obtained in Polymerization Example 1, and the resulting mixture was added to a twin-screw extruder (TEM-26SX from Shibaura Machine Co. Ltd.) via a rotary feeder (speed; 8 rpm). The raw materials were kneaded and pelletized using the twin-screw extruder with a cylinder temperature set to 275°C and a screw speed adjusted to 300 rpm to obtain a polycarbonate resin composition.

### [Examples 2-6 and Reference Example]

Polycarbonate resin compositions were obtained in the same manner as in Example 1 except that the BPA oligomer (BPA-Olig) and the polycarbonate resin (BPEF-PC) were used as shown in Table 1. In these Examples 1-6 and Reference Example, the content of the oligomer relative to the total mass of the polycarbonate resin composition was adjusted to 7.4 wt%.

### [Comparative Example 1]

A polycarbonate resin composition was obtained in the same manner as in Example 1 except that a polycarbonate resin consisting of BPA (Iupilon H-4000 from Mitsubishi Engineering Plastics Corporation) was used instead of the BPA oligomer (BPA-Olig). In Comparative Example 1, the content of the BPA resin relative to the total mass of the polycarbonate resin composition was adjusted to 7.4 wt%.

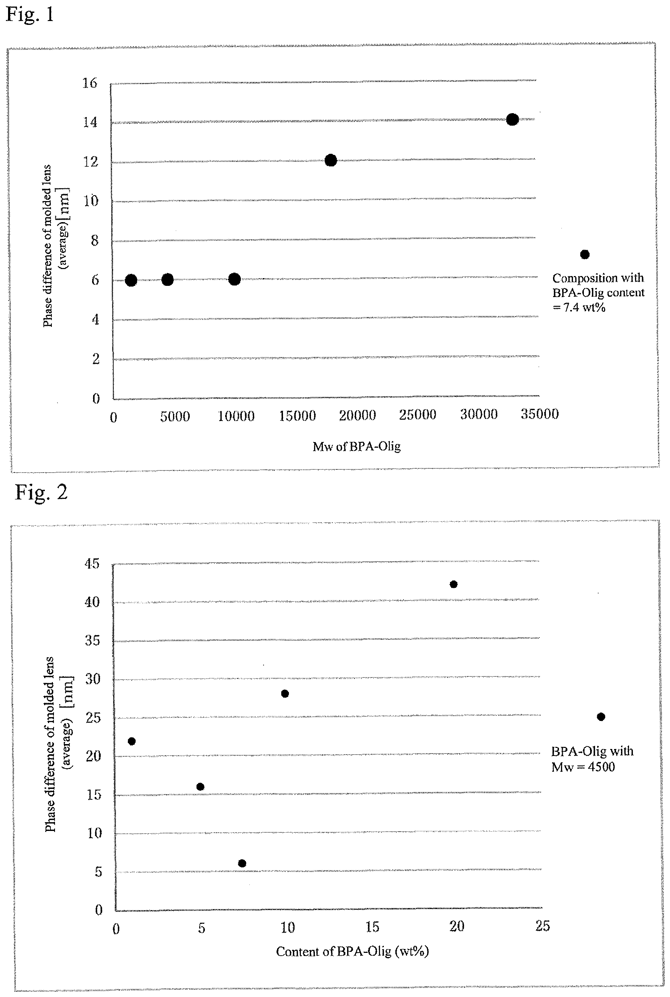

Table 1 and Figure 1 show the physical properties of the polycarbonate resin compositions obtained in these Examples, Reference Example, and Comparative Example.

The polycarbonate resin composition obtained in Reference Example was unable to be pelletized due to small melt viscosity and however, was considered to realize good properties such as a phase difference when used as a raw material for a molded body, from the results of the other examples.

**[Table 1]**

| | **Structural unit (A)** | **Structural unit (B)** | | | | | | **Characteristics** | | |
|---|---|---|---|---|---|---|---|---|---|---|
| | **BPEF-PC (wt%)** | **BPA-Olig (wt%)** | | | | | **BPA-PC lupilon H4000** | **Phases difference of molded lens (average)** | **Appearance of molded lens** | **Tg** |
| | **Mw=32000** | **Mw=4500** | **Mw=1500** | **Mw=10000** | **Mw=800** | **Mw=18000** | **Mw=33000** | **[nm]** | | **[°C]** |
| **Example 1** | **92.6** | **7.4** | **0** | **0** | **0** | **0** | **0** | **6** | **Excellent** | **140** |
| **Example 2** | **92.6** | **7.4** | **0** | **0** | **0** | **0** | **0** | **6** | **Fair** | **140** |
| **Example 3** | **92.6** | **7.4** | **0** | **0** | **0** | **0** | **0** | **6** | **Fair** | **140** |
| **Example 4** | **92.6** | **0** | **7.4** | **0** | **0** | **0** | **0** | **6** | **Fair** | **136** |
| **Example 5** | **92.6** | **0** | **0** | **7.4** | **0** | **0** | **0** | **12** | **Excellent** | **145** |
| **Reference Example** | **92.6** | **0** | **0** | **0** | **7.4** | **0** | **0** | **Impossible to pelletize** | **Impossible to pelletize** | **Impossible to pelletize** |
| **Example 6** | **92.6** | **0** | **0** | **0** | **0** | **7.4** | **0** | **13** | **Excellent** | **145** |
| **Comparative Example 1** | **92.6** | **0** | **0** | **0** | **0** | **0** | **7.4** | **14** | **Excellent** | **145** |

### [Examples 7 and 8 and Comparative Examples 2 and 3]

Polycarbonate resin compositions were obtained in the same manner as in Example 1 except that the BPA oligomer (BPA-Olig) and the polycarbonate resin (BPEF-PC) were used as shown in Table 2. In these Examples 1, 7, and 8 and Comparative Example 2, all the weight average molecular weights (Mw) of the oligomers contained in the polycarbonate resin compositions were 4,500. The polycarbonate resin composition of Comparative Example 3 contained no oligomer.

Table 2 and Figure 2 show the physical properties of the polycarbonate resin compositions obtained in these Examples and comparative examples, together with the physical properties of Example 1.

**[Table 2]**

| | **Structural unit (A)** | **Structural unit (B)** | | | | | | **Characteristics** | | |
|---|---|---|---|---|---|---|---|---|---|---|
| | **BPEF-PC (wt%)** | **BPA-Olig (wt%)** | | | | | **BPA-PC Iupilon H4000** | **Phases difference of molded lens (average)** | **Appearance of molded lens** | **Tg** |
| | **Mw=32000** | **Mw=4500** | **Mw=1500** | **Mw=10000** | **Mw=800** | **Mw=18000** | **Mw=33000** | **[nm]** | | **[°C]** |
| **Comparative Example 2** | **80** | **20** | **0** | **0** | **0** | **0** | **0** | **42** | **Good** | **130** |
| **Example 1** | **92.6** | **7.4** | **0** | **0** | **0** | **0** | **0** | **6** | **Excellent** | **140** |
| **Example 7** | **95** | **5** | **0** | **0** | **0** | **0** | **0** | **16** | **Excellent** | **142** |
| **Example 8** | **99** | **1** | **0** | **0** | **0** | **0** | **0** | **22** | **Excellent** | **144** |
| **Comparative Example 3** | **100** | **0** | **0** | **0** | **0** | **0** | **0** | **24** | **Excellent** | **145** |

## Claims

1. A resin composition comprising
an oligomer comprising a first structural unit (A) derived from a monomer represented by general formula (1) below, and
a polycarbonate resin comprising a second structural unit (B) derived from a monomer represented by any of general formulas (2a)-(2c) below, wherein:
the molecular weight (Mw) of the oligomer is 500-20,000: 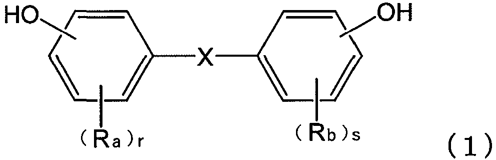 (in formula (1),
Rₐ and R_{b} are each independently hydrogen, fluorine, chlorine, bromine, iodine, or an optionally substituted alkyl group with 1-20 carbon atoms, aryl group with 6-12 carbon atoms, alkenyl group with 2-12 carbon atoms, alkoxy group with 1-5 carbon atoms, or aralkyl group with 7-17 carbon atoms,
r and s are each independently an integer from 0 to 4, and
X is represented by formula (3): 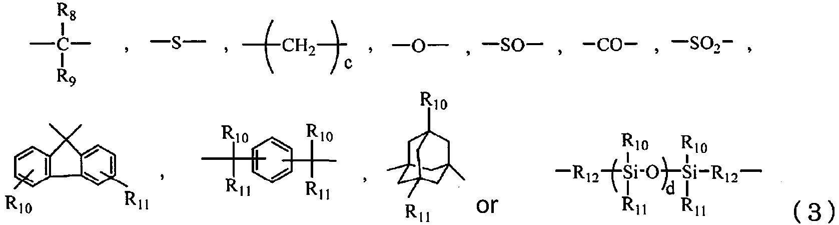 (in formula (3),
R₈ and R₉ each independently represent hydrogen, fluorine, chlorine, bromine, iodine, or an optionally substituted alkyl group with 1-20 carbon atoms, alkoxy group with 1-5 carbon atoms, or aryl group with 6-12 carbon atoms, or
R₈ and R₉ are groups that are bonded to form a carbocyclic ring with 5-20 carbon atoms or a heterocyclic ring with 5-12 elements,
R₁₀ and R₁₁ each independently represent hydrogen, fluorine, chlorine, bromine, iodine, or an optionally substituted alkyl group with 1-9 carbon atoms, alkoxy group with 1-5 carbon atoms, alkenyl group with 2-12 carbon atoms, or aryl group with 6-12 carbon atoms,
R₁₂ is each independently an optionally substituted alkylene group with 1-9 carbon atoms,
c represents an integer from 0 to 20, and
d represents an integer from 1 to 500) 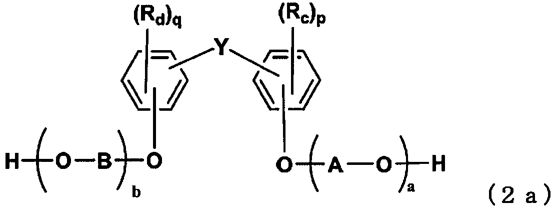 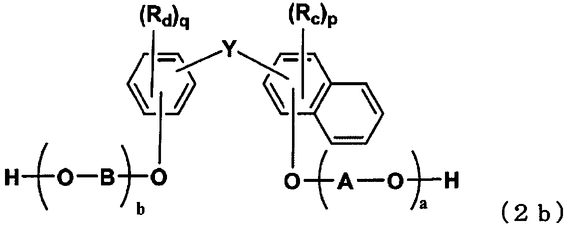 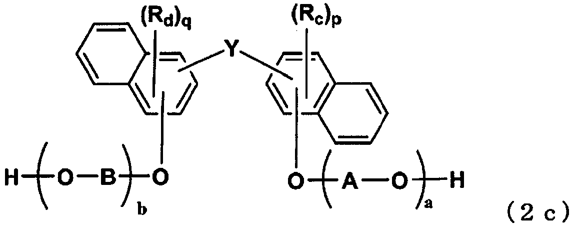 (in general formulas (2a)-(2c),
R_{c} and R_{d} are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, and an optionally substituted aryl group with 6-20 carbon atoms,
Y is each independently an optionally substituted fluorene group,
A and B each independently represent an optionally substituted alkylene group with 1-5 carbon atoms,
p and q each independently represent an integer from 0 to 4, and
a and b each independently represent an integer from 0 to 10).

2. The resin composition according to claim 1, wherein the molecular weight (Mw) of the oligomer is 1,000-10,000.

3. The resin composition according to claim 1, wherein the molecular weight (Mw) of the polycarbonate resin is 20,000-300,000.

4. The resin composition according to claim 1, wherein
in general formula (1), which represents the monomer that generates the first structural unit (A),
Rₐ and R_{b} are each independently hydrogen, or an optionally substituted alkyl group with 1-12 carbon atoms or aryl group with 6-10 carbon atoms, and
r and s are each independently 0 or 1.

5. The resin composition according to claim 1, wherein the monomer that generates the second structural unit (B) is represented by general formula (2a).

6. The resin composition according to claim 1, wherein the content of the oligomer relative to the total mass of the resin composition is 0.5-18 wt%.

7. The resin composition according to claim 1, wherein the mass ratio between the polycarbonate resin and the oligomer is 80:20-99:1.

8. The resin composition according to claim 7, wherein the mass ratio between the polycarbonate resin and the oligomer is 90:10-95:5.

9. The resin composition according to claim 1, wherein the resin composition comprises any of a polycarbonate oligomer, a polyester oligomer, and a polyester carbonate oligomer having the first structural unit (A).

10. The resin composition according to claim 1, wherein the resin composition further comprises any of a polyester resin and a polyester carbonate resin having the second structural unit (B).

11. The resin composition according to claim 1, wherein the average phase difference of the resin composition is 40 nm or less.

12. A method for producing the resin composition according to any one of claims 1-11, the production method comprising
mixing the polycarbonate resin and the oligomer at 270°C or higher, followed by melt extrusion.

13. The production method according to claim 12, wherein a screw speed in a cylinder in which the melt extrusion is performed is 200 rpm or more.

14. The production method according to claim 12, wherein the polycarbonate resin and the oligomer are continuously added into the cylinder using a rotary feeder.

15. An optical material comprising the resin composition according to any one of claims 1-11.

16. A molded article obtained by molding using the resin composition according to any one of claims 1-11.

17. The molded article according to claim 16 which is a lens having an average phase difference of 40 nm or less.
